# FASCICULE DE BREVET EUROPEEN

(11) **EP 4 270 874 B1**
(45) Date de publication et mention de la délivrance du brevet: **12.02.2025**
(21) Numéro de dépôt: 23170235.8
(22) Date de dépôt: 27.04.2023
(51) Int. Cl.: H04L 9/40

(54) **PASSERELLE DE SÉCURITÉ RÉSEAU EMBARQUÉE À BORD D'UN AÉRONEF POUR CONNECTER DES DOMAINES DE CONFIANCE BASSE ET HAUTE D'UNE INFRASTRUCTURE INFORMATIQUE AVIONIQUE**
BORDINTERNES NETZWERKSICHERHEITSGATEWAY ZUR VERBINDUNG VON NIEDRIG- UND HOCHSICHERHEITSDOMÄNEN EINER AVIONIK-COMPUTING-INFRASTRUKTUR
NETWORK SECURITY GATEWAY ONBOARD AN AIRCRAFT FOR CONNECTING LOW AND HIGH TRUST DOMAINS OF AN AVIONICS COMPUTER INFRASTRUCTURE

(30) Priorité: 29.04.2022 FR 2204073
(43) Date de publication de la demande: 01.11.2023
(73) Titulaire: THALES, 92400 Courbevoie (FR)
(72) Inventeur: MONNIER, Stéphane, 33700 MERIGNAC (FR); NOINSKI, Alexandre, 33700 MERIGNAC (FR); FINE, Alexandre, 33700 MERIGNAC (FR)
(74) Mandataire: Lavoix

(56) Documents cités:
- EP-B1- 3 068 101
- FR-A1- 2 922 705

## Description

La présente invention a pour domaine celui des passerelles de sécurité réseau destinées à être embarquées à bord d'aéronefs, civils ou militaires.

Une passerelle de sécurité réseau permet une interconnexion entre deux domaines informatiques qui sont caractérisés par des niveaux de criticité différents, en particulier entre un domaine de faible confiance et un domaine critique pour la sécurité (concept de « safety » en anglais) de l'aéronef, comme par exemple le domaine de contrôle de l'avion - ACD (« Aircraft Control Domain »).

Cette interconnexion peut être permanente, dans le cas par exemple de deux réseaux de l'avion mis à contribution durant une phase de vol, ou temporaire, dans le cas par exemple d'un équipement de maintenance connecté à l'avion durant une phase de maintenance au sol.

La passerelle permet de protéger le domaine de plus haute criticité en filtrant les flux de données provenant du domaine de plus faible criticité, en en rejetant les flux de données qui ne sont pas compatibles avec le niveau de criticité le plus haut, notamment les flux de données correspondant à des attaques informatiques malveillantes.

Par exemple, le document FR 2 922 705 A1 divulgue une passerelle effectuant un contrôle poussé des données pour limiter le risque de corruption du réseau de niveau de sécurité élevé. Différents contrôles sont envisagés comme la vérification d'étiquettes, un test cryptographique, la mise en oeuvre d'un pare-feu...

Par exemple encore, le document EP 3 068 101 B1 divulgue un système de filtrage pour l'échange sécurisé de données entre des domaines de niveaux de confidentialité différents. Il comporte, en amont, un module de suppression de l'enveloppe de transport, un module de protection du type pare-feu et un module de rupture protocolaire. Symétriquement, en aval, il comporte un module de rupture protocolaire inverse, un module de protection et un module d'ajout de l'enveloppe de transport.

Une telle passerelle doit être développée avec le plus haut niveau de développement pour la sécurité (niveau « SAL 3 » dans le référentiel défini par la norme ED-203A) tout en assurant de bonnes propriétés de cyber-sécurité, notamment l'impossibilité pour un attaquant de contourner les fonctions de filtrage mises en oeuvre par la passerelle.

Cependant, le respect de telles exigences de développement ainsi que la vérification permettant de garantir le niveau de sécurité effectivement fourni constituent des difficultés majeures.

Le but de la présente invention est de proposer une architecture de passerelle permettant de répondre à ces problèmes.

Pour cela l'invention a pour objet une passerelle de sécurité selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
[Fig 1] La figure 1 est une représentation schématique d'un mode de réalisation préféré de la passerelle de sécurité avionique selon l'invention ; et,
[Fig 2] La figure 2 est un chronogramme représentant différents exemples de fonctionnement de la passerelle de la figure 1.

### STRUCTURE

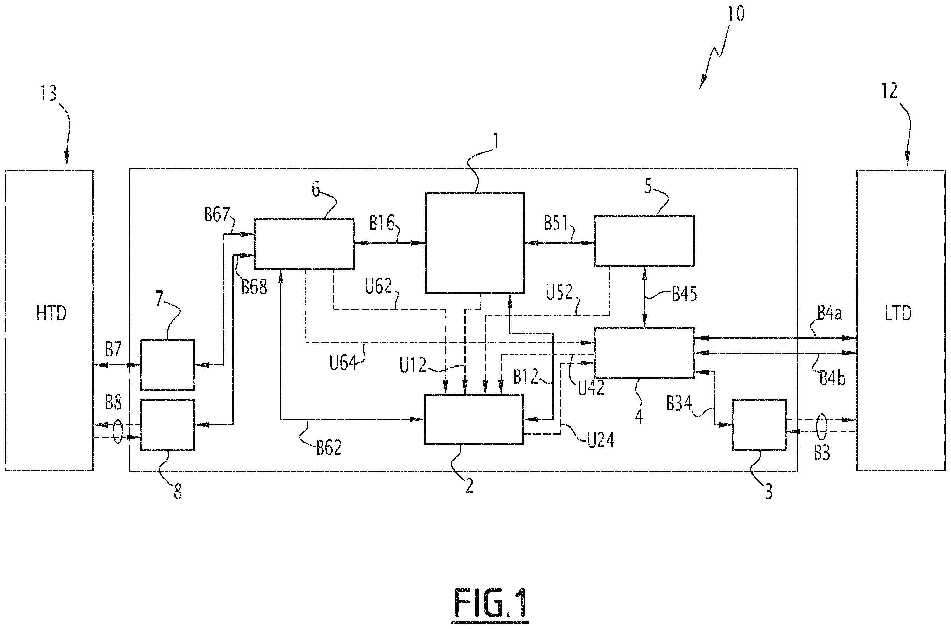

En se référant à la figure 1, l'architecture de la passerelle selon l'invention va être présentée. Sur cette figure, les liaisons bidirectionnelles sont en traits pleins tandis que les liaisons unidirectionnelles sont en traits pointillés.

La passerelle de sécurité réseau 10 est embarquée à bord d'un aéronef. Elle est placée à l'interface entre un domaine de confiance basse 12, ou domaine « LTD », et un domaine de confiance haute 13, ou domaine « HTD », d'une infrastructure informatique avionique. Par exemple le domaine 13 correspond au domaine de contrôle de l'avion et le domaine 12 correspond à un autre domaine à bord de l'aéronef ou connecté temporairement à l'aéronef.

La passerelle 10 a pour fonction d'assurer un transfert sécurisé des données au moins du domaine de confiance basse 12 vers le domaine de confiance haute 13. Pour cela, la passerelle 10 filtre les flux de données, tout en étant robuste aux attaques informatiques cherchant à contourner ce filtrage.

De préférence, la passerelle 10 est une passerelle Ethernet / Ethernet. Alternativement, il s'agit d'une passerelle ARINC 429 / ARINC 429. Plus généralement, il s'agit d'une passerelle Ethernet et/ou ARINC 429 et/ou ARINC 664 (de préférence ARINC 664 P3 ou P7) côté domaine de confiance basse et Ethernet et/ou ARINC 429 et/ou ARINC 664 (de préférence ARINC 664 P3 ou P7) côté domaine de confiance haute.

L'architecture de la passerelle 10 est de préférence fondée sur une unique carte électronique 11 portant plusieurs noeuds de traitement de données (ou « Data Processing Node » en anglais), chaque noeud étant dédié à la réalisation d'une ou plusieurs fonctions de sécurité spécifiques. Il s'agit donc d'une architecture distribuée.

Un noeud peut être tout type de dispositif disposant de ses propres ressources de calcul, mémoire, et port de communication. De préférence, il s'agit d'un microcontrôleur, dans la mesure où un tel composant présente une consommation réduite, ce qui par conséquent limite les problèmes de dissipation de chaleur, question critique dans le domaine avionique. Alternativement, il s'agit d'un circuit logique programmable, comme par exemple un FPGA (« Field-Programmable Gate Array »).

Les différentes fonctions sont par conséquent ségrégées physiquement.

La carte 11 porte ainsi un noeud maître 1. Le noeud maître 1 réalise la fonction de filtrage en tant que telle.

La carte 11 porte également plusieurs noeuds esclaves. Dans le mode de réalisation de la figure 1, quatre noeuds esclaves sont prévus, numérotés 2, 4, 5 et 6. Ils réalisent des fonctions respectivement de sécurité, de pare-feu, de formatage et de formatage inverse.

La carte 11 porte également une pluralité de dispositifs de conversion. Dans le mode de réalisation de la figure 1, trois dispositifs de conversion sont prévus, numérotés 3, 7 et 8.

Ces noeuds et dispositifs de conversion communiquent entre eux par des liaisons.

Les noeuds de traitement de données de pare-feu 4, de formatage 5, maître 1, et de rupture protocolaire inverse 6 sont connectés en série pour former une chaîne de filtrage des flux de données.

Le noeud de traitement de données de sécurité 2 est relié à chacun des noeuds de traitement de données de la chaîne de filtrage.

Le noeud maître 1 est ainsi « enfoui » au coeur de la carte 11, au sens où il ne présente aucune interface directe avec l'un ou l'autre des domaines 12 et 13.

L'architecture de la passerelle est telle qu'un flux de données provenant du domaine de confiance basse 12 est contraint de passer successivement à travers les noeuds de pare-feu 4, de formatage 5 et maître 1. Cette contrainte est réalisée physiquement au moyen des liaisons de communication entre ces noeuds : l'unique canal de communication opérationnelle sortant du noeud 4 (hors de l'interface vers le domaine de confiance basse) amène au noeud 5 et l'unique canal de communication opérationnelle sortant du noeud 5 (hors de l'interface vers le noeud 4) amène au noeud 1.

Côté niveau de confiance basse de la passerelle (c'est-à-dire les noeuds 4, 5 et 1), il y a bien des canaux de communication entre chacun des noeuds 4, 5 et 1 d'une part et le noeud 2 d'autre part, mais ces canaux, le long des liaisons U42, U52 et U12, permettent uniquement la remontée d'informations de fonctionnement générées par un noeud vers un fichier de journalisation ( fichier « log ») mémorisé par le noeud 2.

Pour la communication entre une application du domaine de confiance basse 12 et un service du noeud 2 (comme une application de contrôle exploitant le fichier de journalisation mémorisé par le noeud 2), les communications montantes d'interrogation sont reçues par le noeud 1 puis transmises après filtrage vers le noeud 2 via la liaison B12, et les communications descendantes de réponse sont transmises par le noeud 2 soit vers le noeud 1 via la liaison B12 (cas par exemple d'un filtrage contextuel mis en oeuvre par le noeud 1), soit directement vers le noeud 4 via la liaison U24 (pour communiquer directement et par conséquent plus rapidement avec le domaine 12).

### Noeud de pare-feu 4

Le noeud de pare-feu 4 est positionné en frontal avec le domaine de confiance basse 12 d'où peuvent provenir les attaques informatiques.

Il présente au moins un port d'entrée/sortie pour l'établissement d'une liaison bidirectionnelle avec le domaine 12. De préférence, il comporte trois ports permettent d'établir :
- une première liaison B4a, directe avec le domaine 12, par exemple un réseau de l'avion durant une phase de vol. Il s'agit par exemple d'une liaison Ethernet 100 Mbit/s ;
- une seconde liaison B4b, directe avec le domaine 12, par exemple de connexion à un équipement de maintenance durant une phase de maintenance au sol. Il s'agit par exemple d'une liaison Ethernet 100 Mbit/s;
- une troisième liaison B34, indirecte avec le domaine 12, via le premier module de conversion 3.

Le premier module de conversion 3 permet de convertir un flux de données provenant du domaine 12, par exemple au format ARINC 429, en un flux de données au format requis sur le liaison B34. La liaison B34 est par exemple un bus SPI ou une liaison série asynchrone.

Le premier module 3 est lui-même connecté directement au domaine 12 par une liaison bidirectionnelle B3, par exemple constituée de deux liaisons unidirectionnelles pour assurer la bidirectionnalité.

Le noeud de pare-feu 4 présente également un port d'entrée/sortie pour l'établissement d'une liaison B45, bidirectionnelle, avec le noeud de déformatage 5.

Le noeud de pare-feu 4 présente un port de sortie pour l'établissement d'une liaison U42, unidirectionnelle, avec le noeud de service 2.

Le noeud de pare-feu 4 présente un port d'entrée pour l'établissement d'une liaison U24, unidirectionnelle, avec le noeud de service 2.

Le noeud de pare-feu 4 présente un port d'entrée pour l'établissement d'une liaison U64, unidirectionnelle, avec le noeud de reformatage 6.

Ce premier noeud 4 dans la chaîne de filtrage des données assure un premier niveau de filtrage de type pare-feu (« firewall » en anglais). Il exécute différentes règles de vérification de sécurité sur les flux de données reçus du domaine 12.

Si le flux de donnée provenant du domaine 12 est accepté par le noeud 4, il est réémis vers le noeud 5.

En revanche, si le flux est rejeté, le noeud 4 génère des informations de journalisation et les transmet au noeud de service 2.

Le noeud de pare-feu 4 réalise par exemple les filtrages suivants :
- n'accepter un flux du domaine de confiance basse que s'il est déclaré, par exemple qu'il comporte l'identifiant d'un port UDP déclaré ;
- vérifier la taille des trames du flux du domaine de confiance basse, cette taille devant être conforme à des valeurs configurables (taille minimale / taille maximale) ;
- vérifier que, pour un flux donné, la fréquence de réception des trames est conforme à des valeurs qui sont également configurables ;
- vérifier que l'adresse IP de la source du flux est conforme à une liste de valeurs autorisée, cette liste étant configurable.

Au cas où le module 4 rejette une trame du flux, les informations de l'entête de cette trame sont envoyées vers le module de service 2. Une agrégation des informations d'entête est avantageusement réalisée par le module 4 lorsqu'un trop grand nombre de trames sont rejetées.

### Noeud de formatage 5

Le noeud 5 est positionné entre le noeud 4 et le noeud maître 1 dans la chaîne de filtrage des données.

Il présente un port d'entrée/sortie pour l'établissement de la liaison B45, bidirectionnelle, avec le noeud 4 et un port d'entrée/sortie pour l'établissement d'une liaison B51, bidirectionnelle, avec le noeud maître 1.

Le noeud 5 présente un port de sortie pour l'établissement d'une liaison U52, unidirectionnelle, vers le noeud de service 2.

Le noeud 5 assure un deuxième niveau de filtrage en réalisant une modification du format des flux.

Ainsi, pour un flux de données provenant du domaine de confiance basse, le module 5 réalise une rupture protocolaire. Il détermine la nature du flux incident, c'est-à-dire son format. Par exemple le flux de données est relatif à un plan de vol ou encore au téléchargement d'un logiciel. Le noeud 5 convertit ensuite ce flux incident dans un format neutre. Si la rupture protocolaire est réussie (dans le sens où le message contenu dans le flux de données incident est cohérent, sans erreur de syntaxe), le flux est réémis, dans ce format neutre, vers le noeud maître 1. En revanche, si le flux incident est rejeté, le noeud 5 génère de nouvelles entrées de journalisation et les transmet au noeud de service 2 via la liaison U52.

Pour un flux de données provenant du domaine de confiance haute, le module 5 réalise une rupture protocolaire inverse. Il reçoit un flux de données dans le format neutre depuis le noeud maître 1. Il convertit ce flux dans le format requis avant de le transmettre au noeud de pare-feu 4.

Le format neutre n'est pas standardisé et dépend des implémentations.

### Noeud maître 1

Dans la chaîne de filtrage des données, le noeud maître 1 est positionné entre le noeud de déformatage 5 et le noeud de reformatage 6.

Il présente un port d'entrée/sortie pour l'établissement d'une liaison B51 bidirectionnelle avec le noeud 5 et un port d'entrée/sortie pour l'établissement d'une liaison B16 bidirectionnelle avec le noeud 6.

Il présente, de plus, un port de sortie pour l'établissement d'une liaison U12 unidirectionnelle avec le noeud de service 2.

Le noeud maître 1 effectue différents filtrages.

Par exemple, le noeud maître réalise un filtrage de type domaine d'usage, où chaque donnée présentée dans le format neutre de la rupture protocolaire est filtrée par rapport à la valeur qu'elle est censée représenter. Par exemple : filtrer un champ de type texte en éliminant certains caractères spéciaux ; filtrer un champ vitesse par rapport aux valeurs potentiellement atteintes par l'aéronef ; interdire des flux de certaine nature en fonction des phases de l'aéronef (vol, roulage au sol, maintenance au sol, etc.), où telle ou telle donnée n'a pas raison d'être.

Par exemple encore, le noeud maître 1 applique un filtrage rapide ou un filtrage lent de manière à respecter un temps de latence adapté à la nature du flux incident, telle qu'identifiée par le noeud 5. Cela permet de limiter le temps de traversée de certains flux dits critiques. Le noeud maître 1 priorise ainsi les flux critiques en assurant un traitement dans une tache dédiée, les autres flux, non critiques, étant traités dans une tache générale.

Par exemple encore, le noeud maître 1 applique un filtrage contextuel. Par exemple si un premier message de requête circule du domaine 13 vers le domaine 12, le noeud maître 1 s'attend à devoir filtrer le message de réponse correspondant que le domaine 13 adressera au noeud 12. Le noeud maître 1 applique ainsi un traitement de vérification de la cohérence des échanges entre les deux domaines.

Le noeud maître 1 effectue avantageusement des tests de surveillance du bon fonctionnement de la carte électronique 11 et de ses composants. L'exécution d'un test est par exemple déclenchée dans une phase de maintenance au sol.

Le noeud maître 1 effectue avantageusement un filtrage des requêtes de passage en téléchargement, en particulier sur le bon format de telles requêtes, le téléchargement consistant ensuite à importer des informations pour le fonctionnement de la passerelle (valeur de configuration du pare-feu, mise à jour logicielle pour réaliser la rupture protocolaire d'un format de données vers le format neutre, etc.)

Par exemple, dans une phase de maintenance au sol, on connecte un équipement de maintenance à la passerelle 10 permettant de mettre à jour un logiciel du module de pare-feu 4. Cet équipement transmet une requête de téléchargement, qui est donc filtrée par le module de pare-feu 4, qui la retransmet vers le module de rupture protocolaire 5, qui lui-même la retransmet vers le module maitre 1.

Constatant qu'il s'agit d'une requête de téléchargement, le noeud maitre 1 vérifie toute une série de conditions. Parmi ces conditions il y a par exemple le fait qu'un équipement soit effectivement connecté à la passerelle, que la phase de fonctionnement de l'aéronef corresponde à une phase de maintenance au sol, etc. En cas de vérification positive, le noeud 1 est propre à modifier le mode de fonctionnement de la passerelle pour passer d'un mode par exemple de maintenance dans un mode de téléchargement.

Le noeud 1 est propre à générer un signal d'interruption conduisant au redémarrage de la passerelle, c'est-à-dire au redémarrage de chacun des noeuds.

Le noeud maître 1 exécute une application de détection d'intrusion HIDS (pour « Host-based Intrusion Détection System ») sur tous les flux qu'il filtre. Pour l'exécution de cette application, l'application de détection d'intrusion a besoin de données d'environnement issues de l'ensemble des noeuds et centralisées par le noeud de service 2. D'où la présence de la liaison de communication bidirectionnelle B12 entre le noeud maître 1 et le noeud de service 2 pour l'échange de ces données.

Les informations de détection générées par cette application constituent des entrées du journal maintenu à jour par le noeud de service 2. Ces informations sont adressées par le noeud 1 au noeud 2 via la liaison U12.

Une fois le flux filtré, le noeud maître 1 renvoie celui-ci vers le noeud de reformatage 6.

Si le flux est rejeté, des informations de journalisation sont générées et transmises au noeud de service 2 via la liaison U12.

Le noeud maître 1 est développé avec le plus haut niveau d'assurance qualité cyber (SAL3).

### Noeud de formatage inverse 6

Le noeud 6, en aval du noeud maître 1 dans la chaîne de filtrage, réalise une fonction de formatage inverse de celle réalisée par le noeud de formatage 5.

Ainsi, pour un flux de données provenant du domaine de confiance basse ayant subi une rupture protocolaire à la traversée du noeud 5, le noeud 6 réalise une rupture protocolaire inverse pour passer du format neutre vers un format attendu par le domaine de confiance haute 13.

Inversement, pour un flux de données provenant du domaine de confiance haute et devant être aiguillé vers le noeud 1, le noeud 6 réalise une rupture protocolaire. De l'autre côté du noeud maître 1, ce sera au noeud 5 de réaliser la rupture protocolaire inverse pour passer du format neutre vers un format attendu par le noeud de pare-feu ou domaine de confiance basse.

Dans le mode de réalisation de la figure 1, le noeud 6 présente un port d'entrée/sortie pour l'établissement de la liaison B16 bidirectionnelle avec le noeud maître 1.

Il présente un port d'entrée/sortie pour l'établissement d'une liaison B67 bidirectionnelle avec le second module de conversion 7.

Il présente un port d'entrée/sortie pour l'établissement d'une liaison B68 bidirectionnelle avec le troisième module de conversion 8.

Il présente un port d'entrée/sortie pour l'établissement d'une liaison B62 avec le noeud de service 2. Cette liaison est utilisée en monodirectionnel du noeud 6 vers le noeud 2. Elle n'est utilisée en bidirectionnel que lors d'un téléchargement depuis un équipement de téléchargement positionné dans le domaine 13.

Le noeud 6 présente également un port de sortie pour l'établissement d'une liaison U62 unidirectionnelle vers le noeud de service 2.

Le noeud 6 présente un port de sortie pour l'établissement du liaison U64 unidirectionnelle vers le noeud de pare-feu 4.

Si la rupture protocolaire inverse est réussie, le flux est réémis vers le domaine de confiance haute 13.

En revanche, si le flux est rejeté, le noeud 6 génère des informations de journalisation et les transmet au noeud de service 2.

Le second module de conversion 7 permet de convertir un flux de données provenant du noeud 6 en un flux de données au format requis par le domaine 13. Le second module 7 est connecté directement au domaine 13 par un liaison B7 bidirectionnelle, de préférence ARINC 664 P3 ou ARINC 664 P7, en 100 Mbit/s ou éventuellement plus.

Le troisième module de conversion 8 permet de convertir un flux de données provenant du noeud 6 en un flux de données au format requis par le domaine 13. Le troisième module de conversion 8 est connecté directement au domaine 13 par une liaison B8, bidirectionnelle, de préférence ARINC 429.

Il est à noter qu'un flux venant de domaine de confiance haute doit être transmis par le noeud de formatage inverse 6 soit par le noeud maître 1 soit directement vers le noeud de pare-feu 4. La condition d'aiguillage d'un flux par le noeud 6 résulte d'une configuration de ce dernier. Par exemple la condition d'aiguillage dépend du format des données du flux à traiter.

### Noeud de service 2

Le noeud 2 réalise différentes fonctions de sécurité.

Il présente un port d'entrée/sortie pour l'établissement de la liaison B12 bidirectionnelle avec le noeud maître 1, et un port d'entrée/sortie pour l'établissement de la liaison B62 bidirectionnelle avec le noeud 6.

Il présente des ports d'entrée pour l'établissement des liaisons U42, U52, U12, et U62.

Il présente un port de sortie pour l'établissement d'une liaison U24, unidirectionnelle, avec le module de pare-feu 4.

Le noeud de service 2 assure la sauvegarde des événements de sécurité et leurs émissions dans un fichier de journalisation (fichier « log »). Par exemple le fichier de journalisation est sauvegardé au format SYSLOG.

Le noeud de service 2 assure la sauvegarde et l'émission des données associées au bon fonctionnement de la passerelle. Cette fonction est par exemple connue de l'homme du métier sous la dénomination « BITE » (« Built In Test Equipment »). Il s'agit d'effectuer cycliquement ou en fonction d'évènements déclencheurs des tests adaptés sur les différents composants de la passerelle.

Le noeud de service 2 a en charge les échanges de téléchargement avec un équipement externe, une fois que le passage en téléchargement a été validé par le noeud maître 1. Pour répondre à une requête de téléchargement du fichier de journalisation émise par une application du domaine de confiance basse 12 et validée par le noeud 1, le noeud 2 peut transmettre les données via la liaison B12, ou lorsqu'il y a simple interrogation, via la liaison U24 directement vers le noeud de pare-feu 4. Le Lien U24 est ainsi utilisé pour répondre efficacement aux requêtes de téléchargement simples.

Les communications internes à la carte 11 utilisent des technologies distinctes, par exemple Ethernet et série. Par exemple :
- les liaisons bidirectionnelles B45, B51 et B16 sont des bus de données Ethernet, de préférence à 1 Gbit/s ;
- les liaisons bidirectionnelles B62 sont des bus de données Ethernet, de préférence 100 Mbit/s ;
- la liaison B34 est un bus synchronisés (SPI pour « Serial Peripheral Interface ») ou une liaison série asynchrone ;
- les liaisons B67 et B68 est un bus PCI ou PCI Express ;
- et les différentes liaisons unidirectionnelles sont par exemple des bus de données série, de préférence synchronisés (SPI pour « Serial Peripheral Interface »), mais pouvant en variante être asynchrones.

Cette spécificité permet de renforcer les propriétés de non contournement du filtrage.

L'utilisation du protocole Ethernet gigabits le long de la chaîne de filtrage assure des temps de traversée limités entre les domaines 12 et 13 de manière à obtenir des temps de traversée inférieurs à 50ms, conformément aux exigences avioniques. En effet, le protocole Ethernet permet de renvoyer très rapidement un flux après avoir reçu le dernier fragment d'un message. Sans réémission rapide vers le noeud suivant, le temps de traversée de la passerelle serait fortement impacté, notamment pour des messages longs fragmentés, car la rupture protocolaire ne peut se faire que sur un message complet et non un fragment de ce dernier. Les liaisons internes le long de la chaîne de filtrage présentent donc une bande passante supérieure à celle des connexions permettant de connecter la passerelle aux domaines de confiance haute et basse.

Tous les noeuds prévus sur la carte sont synchronisés par une même horloge, qui est sous le contrôle du noeud maitre 1. De cette manière, avec de simples séquenceurs logiciels où chaque noeud est décalé dans l'exécution de ses tâches pour que la fin d'une tâche d'un noeud soit synchronisée avec le début de la tâche du noeud suivant le long de la chaîne de filtrage, le temps de traversée de la passerelle est optimisé en tenant compte du temps des traitements effectués de manière indépendante par chacun des noeuds disposés en série le long de la chaine de filtrage.

### FONCTIONNEMENT/UTILISATION

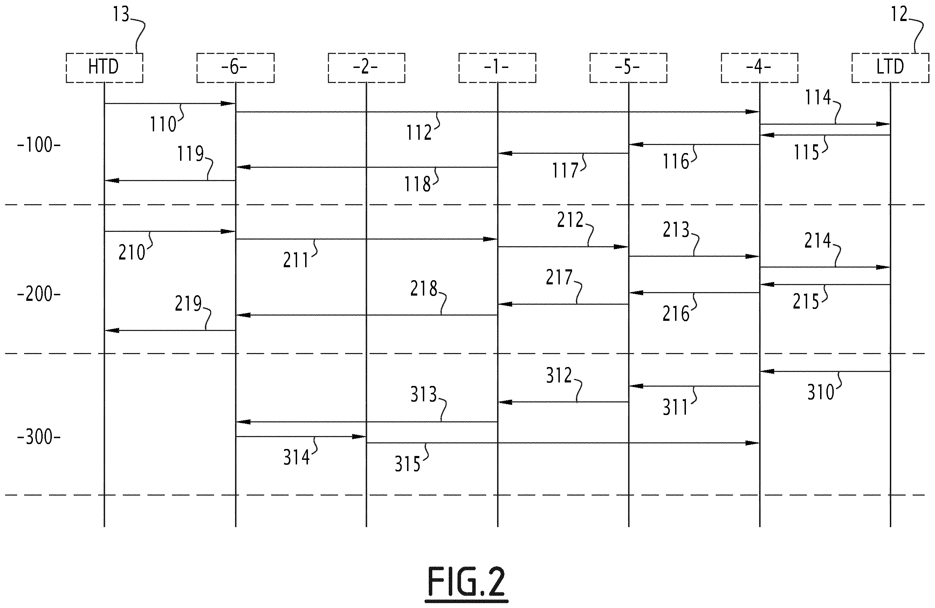

La figure 2 illustre plusieurs fonctionnements possibles de la passerelle 10 venant d'être présentée.

Selon un premier fonctionnement 100, le noeud maitre 1 effectue un filtrage simple des flux de données circulant depuis le domaine de confiance basse 12 vers le domaine de confiance haute 13.

Un message de requête est émis depuis le domaine 13 à destination d'un serveur du domaine 12. La passerelle 10, en coupure entre les deux domaines reçoit le message de requête.

Le message de requête est d'abord reçu (étape 110) par le noeud 6, qui le retransmet (112) directement et sans modification de format au noeud de pare-feu 4 via la liaison U64. Le noeud 4 le retransmet (114) à son tour vers le domaine 12.

Sur le domaine 12, le message de requête est acheminé vers le serveur destinataire, qui élabore un message de réponse adapté.

Le message de réponse est renvoyé du domaine de confiance basse 12 vers le domaine de confiance haute 13. Le message de réponse traverse par conséquent la passerelle 10.

Plus précisément, le message de réponse est reçu (115) par le noeud de pare-feu 4. Après vérification positive, le noeud 4 le retransmet (116) au noeud de formatage 5.

Celui-ci effectue la rupture protocolaire et, en cas de succès, retransmet (117) au noeud maître 1 le message de réponse transcrit dans le format neutre.

En recevant le message de réponse, le noeud maître 1 applique des traitements de filtrage adaptés.

En cas de filtrage positif, le message de réponse est transmis (118) par le noeud maître 1 vers le noeud de formatage inverse 6. Ce dernier convertit le message de réponse selon le format requis et le réémet (119) sur domaine de confiance haute 13.

Selon un second fonctionnement 200, le noeud maitre 1 effectue un filtrage contextuel, en l'occurrence une vérification de cohérence entre messages de requête et de réponse.

Un message de requête est émis depuis le domaine de confiance haute 13 à destination d'un serveur du domaine de confiance basse 12. La passerelle 10, en coupure entre les deux domaines, reçoit le message de requête.

Ce message de requête est reçu (étape 210) par le noeud de formatage inverse 6. Compte tenu par exemple de la valeur d'un champ de l'en-tête du message de requête, le noeud 6 applique une rupture protocolaire sur le message de requête et retransmet (211) le message de requête dans le format neutre vers le noeud maitre 1.

Constatant qu'il s'agit d'une requête, le noeud maître 1 mémorise par exemple l'identifiant de cette requête pour effectuer ultérieurement la vérification de cohérence.

Le noeud maître 1 retransmet (étape 212) le message de requête vers le noeud de formatage 5, qui applique une rupture protocolaire inverse et retransmet (213) le message de requête dans le format adapté vers le noeud 4.

Ce dernier le retransmet (214) à son tour le message de requête vers le domaine 12.

Sur le domaine 12, le message de requête est acheminé vers le serveur destinataire, qui élabore un message de réponse adapté.

Le message de réponse est renvoyé du domaine de confiance basse vers le domaine de confiance élevé. Le message de réponse traverse par conséquent la passerelle 10.

Le message de réponse est renvoyé du domaine de confiance basse 12 vers le domaine de confiance haute 13. Le message de réponse traverse par conséquent la passerelle 10.

Plus précisément, le message de réponse est reçu (215) par le noeud de pare-feu 4, qui le retransmet (216), après vérification, au noeud de formatage 5.

Celui-ci effectue la rupture protocolaire et, en cas de succès, retransmet (217) au noeud maître 1 le message de réponse dans le format neutre.

En recevant le message de réponse, le noeud maître 1 applique les traitements de filtrage adaptés ainsi que la vérification de cohérence. Pour cela, il vérifie si l'identifiant contenu dans le message de réponse correspond à l'identifiant contenu dans le message de requête précédemment traité par le noeud maître 1.

En cas de vérification positive, le message de réponse est retransmis (étape 218) par le noeud maître 1 vers le noeud 6, qui, après rupture protocolaire inverse, le renvoie (219) vers le domaine de confiance haute 13.

En cas de vérification négative, le message de réponse est rejeté par le noeud maître 1 et une entrée relative à l'échec du traitement de cohérence est ajoutée au fichier de journalisation tenu à jour par le module de service 2.

Selon un troisième fonctionnement 300, le domaine de confiance basse 12 applique à la passerelle un message de requête de passage en téléchargement, par exemple en vue de télécharger une mise à jour logicielle pour le noeud de pare-feu 4.

Un message de requête de passage en téléchargement est reçu (étape 310) depuis le domaine de confiance basse 12 par le noeud de pare-feu 4.

Après vérification positive, le noeud de pare-feu 4 le transmet (311) vers le noeud de formatage 5.

Le noeud 5 effectue la rupture protocolaire et retransmet (312) un message de requête de passage en téléchargement au format neutre vers le noeud maitre 1.

Le noeud maître 1 analyse le message de requête de passage en téléchargement. Notamment il vérifie que le fonctionnement courant de l'aéronef est compatible avec un basculement dans un mode de téléchargement de la passerelle. En effet, par exemple si l'aéronef est en vol, le noeud maître 1 rejette la requête de téléchargement car cela risque de nuire à la sécurité de fonctionnement globale de l'aéronef.

En cas de vérification positive, le noeud maître 1 bascule la passerelle dans un mode de fonctionnement de téléchargement.

Il transmet (313) un message de commande de gestion du téléchargement à destination du noeud de service 2, mais via le noeud 6.

Constatant qu'il s'agit d'un message à destination du noeud 2, le noeud 6 route (314) le message de commande vers le noeud 2 le long de la liaison B62.

Sur réception du message de commande, le module de service 2 gère le téléchargement. Le fichier est téléchargé depuis le domaine 12 vers le noeud 2 en passant par les noeuds 4, 5, 1 et 6.

Par exemple, le noeud 2 enregistre (315) le fichier téléchargé dans une mémoire flash du noeud de pare-feu 4.

A l'issue du téléchargement, le noeud 2 indique au noeud maître 1 la fin de l'opération.

Le noeud maître 1 commande alors un redémarrage de la passerelle 10, au cours duquel le noeud de pare-feu 4 réinitialise le contenu de sa mémoire vive - RAM avec les informations contenues dans la mémoire flash qui lui est associée, et par conséquent avec le fichier de mise à jour venant d'être téléchargé.

### AVANTAGES

En ségrégant physiquement les différentes fonctions, la passerelle venant d'être présentée atteint les niveaux de sécurité requis pour le domaine avionique, ce qui ne serait pas le cas d'une simple ségrégation logicielle.

L'architecture de la passerelle, fondée sur différents noeuds physiquement indépendants, permet de simplifier les preuves d'un bon développement des fonctions de sécurité. Par exemple, selon la norme ED-203A, les noeuds maitre 1 et de rupture protocolaire 5 sont avantageusement développés selon le niveau le plus élevé, SAL3 ; le noeud de pare feu 4 selon le niveau intermédiaire, SAL2 ; et les noeuds de service 2 et de rupture protocolaire inverse 6 selon le niveau le plus bas, SAL 1.

Notamment, la rupture protocolaire doit être développée en SAL3 pour pouvoir atteindre un bon niveau de filtrage avec le plus haut niveau d'assurance qualité de cybersécurité.

On notera que ces deux derniers noeuds, puisqu'ils sont situés en aval du noeud maître 1 et que tous les flux de données qu'ils reçoivent sont d'abord filtrés par les noeuds de pare-feu, de rupture protocolaire et maître, bénéficient du niveau de criticité du domaine de criticité haute.

Le noeud de service présente souvent une grande complexité. Il serait compliqué et couteux de le développer selon le niveau SAL2. L'invention permet par conséquent de relâcher les contraintes de développement sur ce composant, tout en garantissant qu'il ne peut pas être utilisé pour contourner le filtrage des flux, qui repassent toujours vers le noeud maître.

L'architecture permet par conséquent d'isoler les tâches en fonction de leurs criticités et de leurs niveaux d'assurance qualité associés, tout en assurant un point de passage des différents flux pour assurer un filtrage systématique. La passerelle permet de réaliser un filtrage de grande qualité en utilisant des technologies différentes en fonction des flux.

La solution proposée assure que tous les flux de données provenant du domaine de sécurité basse passent par le noeud maître. Cette architecture permet de garantir le non contournement de la fonction de filtrage.

Avec cette architecture, les temps de traversée peuvent être assez faible tout en assurant des propriétés de non contournement demandées par le haut niveau d'assurance qualité de cyber-sécurité requis.

Selon cette architecture, le noeud maître n'est pas en relation directe avec le domaine de faible confiance : il ne reçoit que des flux passés par deux filtrages, celui réalisé par le pare-feu et celui réalisé par la rupture protocolaire.

Dans le mode de réalisation préféré présenté précédemment, les différents noeuds de traitement de données sont intégrés sur une même carte électronique, ce qui conduit à une solution présentant un facteur de forme réduit, ce qui est avantageux dans la mesure où les contraintes de volume sont des contraintes fortes dans le domaine avionique. En variante, les noeuds de traitement sont implantés sur plusieurs cartes électroniques connectées les unes aux autres de manière adaptée.

L'aspect modulaire facilite le développement, la certification, la maintenance, et la mise à jour de la passerelle.

On notera que la présente passerelle ne comporte qu'un seul par feu, disposé en entrée connectée au domaine réseau de faible confiance.

On notera également que la passerelle est configurable, ce qui permet de paramétrer les différentes fonctions de filtrage en fonction des menaces courantes.

## Revendications

1. Passerelle de sécurité réseau (10) destinée à être embarquée à bord d'un aéronef pour connecter un domaine de confiance basse (12) et un domaine de confiance haute (13) d'une infrastructure informatique avionique, la passerelle offrant une pluralité de fonctions de sécurité, chaque fonction étant réalisée par un noeud de traitement de données, la passerelle comportant, connectés en série le long d'une chaîne de filtrage d'un flux de données reçu depuis le domaine de confiance basse :
- un noeud de traitement de données de pare-feu (4) ;
- un noeud de traitement de données de rupture protocolaire (5) ;
- un noeud de traitement de données maître (1) ; et,
- un noeud de traitement de données de rupture protocolaire inverse (6),
la passerelle comportant en outre un noeud de traitement de données de sécurité (2) relié à chacun des noeuds de traitement de données de la chaîne de filtrage, les différents noeuds de traitement de données étant ségrégés physiquement,
le noeud de traitement de données maître (1) exécutant une application de détection d'intrusion et les informations de détection générées par ladite application étant adressées au noeud de traitement de données de sécurité (2) en tant qu'entrées d'un fichier de journalisation.

2. Passerelle selon la revendication 1, dans laquelle les noeuds de la chaîne de filtrage sont connectés par des liaisons bidirectionnelles, de préférence au format Ethernet, de préférence encore au format Ethernet 1 Gbit/s, présentant une bande passante supérieure à celle des connexions permettant de connecter la passerelle aux domaines de confiance haute et basse.

3. Passerelle selon l'une quelconque des revendications 1 à 2, dans laquelle le noeud de traitement de données de sécurité (2) est connecté à la pluralité de noeuds de la chaîne de filtrage par des liaisons unidirectionnelles, de préférence au format série, de préférence encore au format série synchronisé.

4. Passerelle selon l'une quelconque des revendication 1 à 3, dans laquelle la passerelle constitue une interface Ethernet et/ou ARINC 429 et/ou ARINC 664, avec le domaine de confiance haute (13) et une interface Ethernet et/ou ARINC 429 et/ou ARINC 664 avec le domaine de confiance basse (12).

5. Passerelle selon l'une quelconque des revendications 1 à 4, dans laquelle le noeud de traitement de données de pare-feu (4) est connecté au domaine de confiance basse (12) par un premier module de conversion (3), réalisant une conversion d'un format d'un flux de données provenant du domaine de confiance basse (12), de préférence le format ARI NC 429, en un format de données attendu par le noeud de traitement de données de pare-feu (4).

6. Passerelle selon l'une quelconque des revendications 1 à 5, dans laquelle le un noeud de traitement de rupture protocolaire inverse (6) est connecté au domaine de confiance haute (13) par un second module de conversion (7), réalisant une conversion d'un format d'un flux de données délivré par le noeud de traitement de rupture protocolaire inverse (6), de préférence le format Ethernet 100 Mbit/s, en un format attendu par le domaine de confiance basse (12), de préférence le format ARINC 664, de préférence encore ARINC 664 P3 ou P7.

7. Passerelle selon l'une quelconque des revendications 1 à 6, dans laquelle le noeud de traitement de données maître (1) filtre un flux de données en fonction d'un contexte ou en fonction d'un niveau de priorité.

8. Passerelle selon l'une quelconque des revendications 1 à 7, dans laquelle tout flux de données provenant du domaine de confiance basse (12) passe par le noeud de traitement de données maître (1), à condition de n'avoir pas été rejeté par le noeud de traitement de données de pare-feu (4) ou le noeud de traitement de données de rupture protocolaire (5).

9. Passerelle selon l'une quelconque des revendications 1 à 8, dans laquelle, outre son interface avec le domaine de confiance basse (12), le noeud de traitement de données de pare-feu (4) ne comporte qu'un port de sortie forçant l'acheminement de tout flux de données opérationnelles provenant du domaine de confiance basse (12) vers le noeud de traitement de données de rupture protocolaire (5), et dans laquelle, outre son interface avec le noeud de traitement de données de pare-feu (4), le noeud de traitement de données de rupture protocolaire (5) ne comporte qu'un port de sortie forçant l'acheminement de tout flux de données opérationnelles provenant du domaine de confiance basse (12) vers le noeud de traitement de données maître (1).

10. Passerelle selon l'une quelconque des revendications 1 à 9, dans laquelle tout flux de données provenant du domaine de confiance haute (13) et à destination du domaine de confiance basse (12) et qui ne passe pas par le noeud de traitement de données maître (1), est acheminé à travers la passerelle via au moins une liaison unidirectionnelle.

11. Passerelle selon l'une quelconque des revendications 1 à 10, ne comportant qu'un seul noeud de traitement de données de pare-feu (4) situé en entrée de la chaine de filtrage du côté du domaine de confiance basse (12).

## Patentansprüche

1. Netzwerksicherheits-Gateway (10), das dazu bestimmt ist, an Bord eines Flugzeugs eingebaut zu sein, um eine Niedrigsicherheitsdomain (12) und eine Hochsicherheitsdomain (13) einer Avionik-Computing-Infrastruktur zu verbinden, wobei das Gateway eine Vielzahl von Sicherheitsfunktionen bietet, wobei jede Funktion durch einen Datenverarbeitungsknoten realisiert wird, wobei das Gateway, in Reihe geschaltet entlang einer Filterkette eines von der Niedrigsicherheitsdomain empfangenen Datenstroms, umfasst:
- einen Firewall-Datenverarbeitungsknoten (4);
- einen Protokollunterbrechungs-Datenverarbeitungsknoten (5);
- einen Master-Datenverarbeitungsknoten (1); und
- einen inversen Protokollunterbrechungs-Datenverarbeitungsknoten (6),
wobei das Gateway ferner einen Sicherheits-Datenverarbeitungsknoten (2) umfasst, der mit jedem der Datenverarbeitungsknoten der Filterkette verbunden ist, wobei die verschiedenen Datenverarbeitungsknoten physisch segregiert sind,
wobei der Master-Datenverarbeitungsknoten (1) eine Intrusion Detection Anwendung ausführt und die von der Anwendung erzeugten Detection-Informationen an den Sicherheits-Datenverarbeitungsknoten
(2) als Einträge in einer Protokolldatei adressiert werden.

2. Gateway nach Anspruch 1, wobei die Knoten der Filterkette über bidirektionale Verbindungen, vorzugsweise im Ethernet-Format, weiter vorzugsweise im Ethernet-Format 1 Gbit/s, verbunden sind, die eine höhere Bandbreite aufweisen als die Verbindungen, die erlauben, das Gateway mit der Niedrigsicherheits- und Hochsicherheitsdomain zu verbinden.

3. Gateway nach einem der Ansprüche 1 bis 2, wobei der Sicherheits-Datenverarbeitungsknoten
(2) mit der Vielzahl von Knoten der Filterkette durch unidirektionale Verbindungen, vorzugsweise im seriellen Format, weiter vorzugsweise im synchronisierten seriellen Format, verbunden ist.

4. Gateway nach einem der Ansprüche 1 bis 3, wobei das Gateway eine Ethernet- und/oder ARINC 429- und/oder ARINC 664-Schnittstelle mit der Hochsicherheitsdomain (13) und eine Ethernet- und/oder ARINC 429- und/oder ARINC 664-Schnittstelle mit der Niedrigsicherheitsdomain (12) bildet.

5. Gateway nach einem der Ansprüche 1 bis 4, wobei der Firewall-Datenverarbeitungsknoten (4) durch ein erstes Konvertierungsmodul (3), das eine Konvertierung eines Formats eines Datenstroms aus der Niedrigsicherheitsdomain (12), vorzugsweise des ARINC 429-Formats, in ein von dem Firewall-Datenverarbeitungsknoten (4) erwartetes Datenformat durchführt, mit der Niedrigsicherheitsdomain (12) verbunden ist.

6. Gateway nach einem der Ansprüche 1 bis 5, wobei der eine inverse Protokollunterbrechungs-Verarbeitungsknoten (6) mit der Hochsicherheitsdomain (13) durch ein zweites Konvertierungsmodul (7) verbunden ist, das eine Konvertierung eines Formats eines von dem inversen Protokollunterbrechungs-Verarbeitungsknoten (6) gelieferten Datenstroms, vorzugsweise des 100 Mbit/s Ethernet-Formats, in ein von der Niedrigsicherheitsdomain (12) erwartetes Format, vorzugsweise das ARINC 664-Format, weiter bevorzugt ARINC 664 P3 oder P7, durchführt.

7. Gateway nach einem der Ansprüche 1 bis 6, wobei der Master-Datenverarbeitungsknoten (1) einen Datenstrom in Abhängigkeit von einem Kontext oder in Abhängigkeit von einer Prioritätsstufe filtert.

8. Gateway nach einem der Ansprüche 1 bis 7, wobei jeder Datenstrom aus der Niedrigsicherheitsdomain (12) den Master-Datenverarbeitungsknoten (1) durchquert, sofern er nicht vom Firewall-Datenverarbeitungsknoten (4) oder vom Protokollunterbrechungs-Datenverarbeitungsknoten (5) abgelehnt wurde.

9. Gateway nach einem der Ansprüche 1 bis 8, wobei der Firewall-Datenverarbeitungsknoten (4) neben seiner Schnittstelle mit der Niedrigsicherheitsdomain (12) nur einen Ausgangsport aufweist, der die Beförderung jedes operativen Datenstroms von der Niedrigsicherheitsdomain (12) zum Protokollunterbrechungs-Datenverarbeitungsknoten (5) erzwingt, und wobei der Firewall-Datenverarbeitungsknoten (4) neben seiner Schnittstelle mit dem Protokollunterbrechungs-Datenverarbeitungsknoten (5) nur einen Ausgangsport aufweist, der die Beförderung jedes operativen Datenstroms von der Niedrigsicherheitsdomain (12) zum Master-Datenverarbeitungsknoten (1) erzwingt.

10. Gateway nach einem der Ansprüche 1 bis 9, wobei jeder Datenstrom von der Hochsicherheitsdomain (13) und an die Niedrigsicherheitsdomain (12) und der nicht durch den Master-Datenverarbeitungsknoten (1) verläuft, über mindestens eine unidirektionale Verbindung durch das Gateway geleitet wird.

11. Gateway nach einem der Ansprüche 1 bis 10, das nur einen einzigen Firewall-Datenverarbeitungsknoten (4) aufweist, der sich am Eingang der Filterkette auf der Seite der Niedrigsicherheitsdomain (12) befindet.

## Claims

1. A network security gateway (10) onboard an aircraft, connecting a low-trust domain (12) and a high-trust domain (13) of an avionics IT infrastructure, the network security gateway providing a plurality of security functions, each security function being performed by a data processing node, the network security gateway including, connected in series along a filtering chain of a data flow received from the low-trust domain:
- a firewall data processing node (4);
- a protocol break data processing node (5);
- a master data processing node (1); and,
- an inverse protocol break data processing node (6),
the network security gateway further including a security data processing node (2) connected to each of the data processing nodes of the filtering chain, the different data processing nodes being physically segregated,
the master data processing node (1) executing an intrusion detection application and a piece of detection information generated by the intrusion detection application being sent to the security data processing node (2) as an entry of a log file.

2. The network security gateway according to claim 1, wherein the data processing nodes of the filtering chain are connected by bidirectional links, preferentially in Ethernet format, more preferentially in 1 Gbit/s Ethernet format, having a larger bandwidth than the bandwidth of the connections used for connecting the gateway to the high- and low-trust domains.

3. The network security gateway according to any one of claims 1 to 2, wherein the security data processing node (2) is connected to the plurality of data processing nodes of the filtering chain by unidirectional links, preferentially in serial format, more preferentially in synchronized serial format.

4. The network security gateway according to any one of claims 1 to 3, wherein the network security gateway forms an Ethernet and/or ARINC 429 and/or ARINC 664 interface with the high-trust domain (13) and an Ethernet and/or ARINC 429 and/or ARINC 664 interface with the low-trust domain (12).

5. The network security gateway according to any one of claims 1 to 4, wherein the firewall data processing node (4) is connected to the low-trust domain (12) by a first conversion module (3), that performs a conversion of a format of a data flow from the low-trust domain (12), preferentially the ARINC 429 format, into a data format expected by the firewall data processing node (4).

6. The network security gateway according to any one of claims 1 to 5, wherein the one inverse protocol break data processing node (6) is connected to the high-trust domain (13) by a second conversion module (7), that performs a conversion from a format of a data flow delivered by the inverse protocol break data processing node (6), preferentially the 100 Mbit/s Ethernet format, into a format expected by the low-trust domain (12), preferentially the ARINC 664 format, preferentially again ARINC 664 P3 or P7.

7. The network security gateway according to any one of claims 1 to 6, wherein the master data processing node (1) filters a data flow according to a context or a level of priority.

8. The network security gateway according to any one of claims 1 to 7, wherein any data flow coming from the low-trust domain (12) passes through the master data processing node (1), provided that the data flow has not been rejected by the firewall data processing node (4) or by the protocol break data processing node (5).

9. The network security gateway according to any one of claims 1 to 8, wherein, in addition to an interface with the low-trust domain (12), the firewall data processing node (4) has only one output port forcing the routing of any operational data flow coming from the low-trust domain (12) to the protocol break data processing node (5), and wherein, in addition to an interface with the firewall data processing node (4), the protocol break data processing node (5) has only one output port forcing the routing of any operational data flow coming from the low-trust domain (12) to the master data processing node (1).

10. The network security gateway according to any one of claims 1 to 9, wherein any data flow coming from the high-trust domain (13) and addressed to the low-trust domain (12) and which does not pass through the master data processing node (1), is routed through the network security gateway via at least one unidirectional link.

11. The network security gateway according to any one of claims 1 to 10, including only one firewall data processing node (4) situated at the input of the filtering chain on the side of the low-trust domain (12).
